# DEMANDE DE BREVET EUROPEEN

(11) **EP 1 175 105 A1**
(43) Date de publication de la demande: **23.01.2002**
(21) Numéro de dépôt: 01116075.1
(22) Date de dépôt: 03.07.2001
(51) Int. Cl.: H04N 13/02, H04N 13/00

(54) **Caméra stéréoscopique munie de moyens pour faciliter le réglage de ses paramètres opto-mécaniques**

(30) Priorité: 17.07.2000 FR 0009305
(71) Demandeur: Thomson Licensing S.A., 92100 Boulogne-Billancourt (FR)
(72) Inventeur: Malnoe, Pascal THOMSON multimedia, 92648 Boulogne Cedex (FR); Guerin, Jean Claude THOMSON multimedia, 92648 Boulogne Cedex (FR)
(74) Mandataire: Ruellan-Lemonnier, Brigitte

(57) **Abrégé**

L'invention concerne une caméra stéréoscopique comportant des moyens pour faciliter le réglage de ses paramètres opto-mécaniques par un opérateur. A cet effet, elle comporte des moyens de mémorisation (16,17) pour mémoriser au moins une image stéréoscopique et un moyen de sélection (18) pour fournir sélectivement aux moyens de visualisation de la caméra soit l'image stéréoscopique mémorisée, soit l'image stéréoscopique courante filmée par les caméras 2D (10,11) de la caméra stéréoscopique.

## Description

La présente invention concerne une caméra stéréoscopique comportant des moyens pour faciliter le réglage de ses paramètres opto-mécaniques par un opérateur.

Une caméra stéréoscopique filme simultanément deux vues d'une même scène, une vue de gauche et une vue de droite, de manière à obtenir des images en relief de la scène. A cet effet, elle comporte généralement deux caméras, dites caméras 2D, délivrant chacune des images en deux dimensions correspondant respectivement à une vue de gauche et une vue de droite de la scène filmée. Le réglage d'une caméra stéréoscopique consiste à régler les paramètres opto-mécaniques de chacune des caméras 2D ainsi que les paramètres fixant la position des caméras 2D l'une par rapport à l'autre. Cela consiste par exemple à régler la distance séparant les deux caméras 2D, l'angle compris entre les axes des deux caméras 2D (appelé communément angle de convergence), la distance focale et la mise au point des deux caméras 2D.

Les paramètres sont réglés les uns après les autres. Le réglage d'un paramètre consiste à modifier la valeur du paramètre considéré jusqu'à obtention du meilleur résultat. Le réglage est effectué au jugé de l'opérateur en fonction de ses besoins. Le réglage de chaque paramètre influant sur les autres paramètres, l'opération de réglage est souvent très longue. De plus, il est souvent très difficile de revenir en arrière lorsque après la modification de plusieurs paramètres, l'opérateur estime que des réglages antérieurs convenaient mieux.
L'invention a pour but de faciliter le réglage des paramètres opto-mécaniques d'une caméra stéréoscopique.

A cet effet, l'invention consiste en une caméra stéréoscopique comportant des première et seconde caméras destinées à générer respectivement des première et seconde séquences d'images, chaque image de ladite première séquence étant associée à une image de ladite seconde séquence, et des moyens pour visualiser une séquence d'images stéréoscopiques à partir desdites première et seconde séquences d'images, caractérisée en ce qu'elle comporte en outre:
- des premiers moyens de mémorisation pour mémoriser respectivement au moins une image de ladite première séquence d'images et l'image associée de ladite seconde séquence d'images, et
- des premiers moyens de sélection placés en amont des moyens de visualisation pour fournir sélectivement auxdits moyens de visualisation soit ladite au moins une image mémorisée de ladite première séquence d'images et l'image mémorisée associée de ladite seconde séquence d'images, soit lesdites première et secondes séquences d'images en provenance desdites premières et secondes caméras.

Avec cette caméra stéréoscopique, il est alors possible de mémoriser au moins une image stéréoscopique et de pouvoir visualiser soit l'image stéréoscopique courante soit l'image stéréoscopique mémorisée. Cette forme de réalisation a pour but de faciliter la comparaison entre les deux images. De cette manière, avant chaque opération de réglage des paramètres de la caméra stéréoscopique, une image stéréoscopique est mémorisée dans les premier et second moyens de mémorisation. Puis, après modification de l'un au moins des paramètres de réglage, le réglage ainsi obtenu peut être évalué en comparant l'image stéréoscopique courante à l'image stéréoscopique mémorisée.

Selon une variante, la caméra stéréoscopique permet également d'estimer le raccord entre une image stéréoscopique courante et une image stéréoscopique mémorisée correspondant par exemple à une scène précédente. Pour ce faire, la caméra stéréoscopique peut comporter également des première et seconde entrées pour recevoir respectivement des troisième et quatrième séquences d'images en provenance d'un équipement extérieur à ladite caméra stéréoscopique, et des seconds moyens de sélection pour fournir sélectivement auxdits premiers et moyens de mémorisation soit lesdites première et seconde séquences d'images en provenance desdites première et seconde caméras, soit lesdites troisièmes et quatrième séquences d'images en provenance dudit équipement extérieur.

Afin de faciliter le retour à des réglages antérieurs, il est possible de mémoriser des valeurs représentatives des paramètres de réglage des première et seconde caméras. A cet effet, la caméra stéréoscopique peut comporter un deuxième moyen de mémorisation.

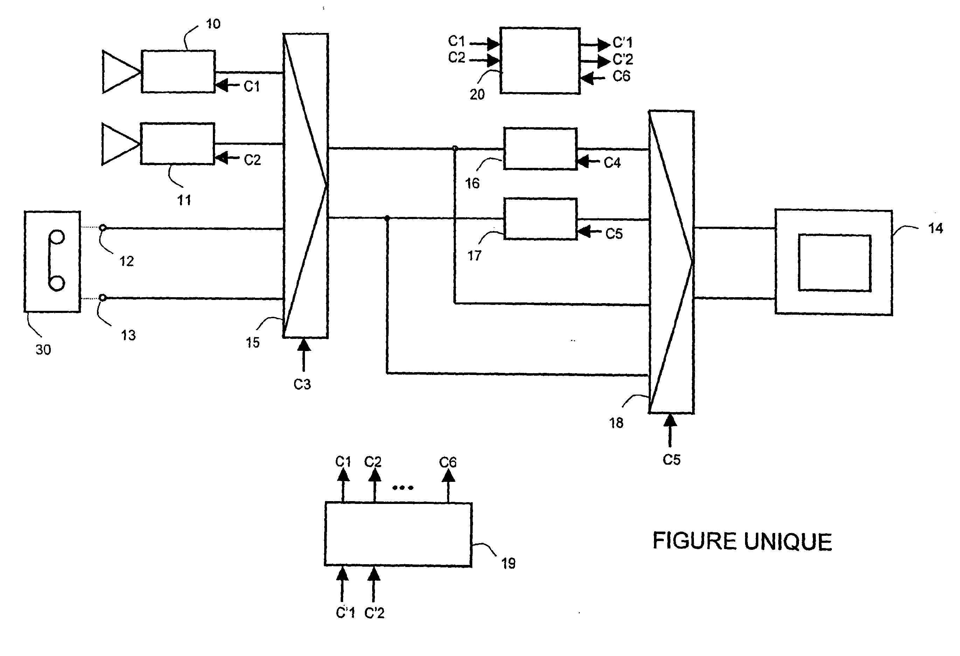

Les caractéristiques de l'invention mentionnés ci-dessus apparaîtront plus clairement à la lecture de la description suivante, faite en relation avec la figure unique qui représente une forme de réalisation d'une caméra stéréoscopique conforme à l'invention.

Sur la figure unique, on considère une caméra stéréoscopique comportant deux caméras 2D, référencées 10 et 11. Elles génèrent respectivement des première et deuxième séquences d'images numériques en deux dimensions. La caméra 10 filme par exemple une vue de gauche de la scène à filmer et la caméra 11 une vue de droite. Deux signaux de commande, notés C1 et C2, sont prévus pour commander ces deux caméras. Les signaux de commande sont délivrés par un circuit de commande référencé 19. La caméra stéréoscopique comporte également deux entrées, référencées 12 et 13, pour recevoir respectivement des troisième et quatrième séquences d'images délivrées par un équipement extérieur 30, par exemple un magnétoscope ou un disque dur. Les images desdites troisième et quatrième séquences se rapportent par exemple à une scène filmée précédemment respectivement par les caméras 10 et 11. Un moyen de sélection, référencé 15, est utilisé pour sélectionner soit les première et deuxième séquences d'images, soit les troisième et quatrième séquences d'images. Ce moyen de sélection est commandé par un signal de commande noté C3 fourni par le circuit de commande 19. Ordinairement, les deux séquences sélectionnées sont ensuite transmises à un moyen de visualisation stéréoscopique, référencé 14, qui génère alors une séquence d'images stéréoscopiques à partir de ces deux séquences. Le moyen de visualisation 14 est par exemple une paire de lunette à écran LCD.

Selon le mode de réalisation préféré, on prévoit deux circuits de mémoire, notés 16 et 17, pour mémoriser chacun au moins une image numérique provenant du moyen de sélection 15. Dans l'exemple illustré, le circuit de mémoire 16 est prévu pour mémoriser une image numérique de la séquence provenant soit de la caméra 10, soit de l'entrée 12 et le circuit de mémoire 17 est quant à lui placé pour mémoriser soit une image de la séquence provenant de la caméra 11, soit de l'entrée 13. L'espace mémoire nécessaire pour stocker une image numérique stéréoscopique est de 1,6 Mo environ pour un standard simple définition (standard PAL par exemple). Un signal de commande C4 est prévu pour commander simultanément les circuits de mémorisation 16 et 17. Enfin, un deuxième moyen de sélection 18 est prévu pour sélectionner les images numériques à fournir au moyen de visualisation stéréoscopique 14. Ce moyen de sélection est commandé par un signal de commande C5. Ce moyen de sélection délivre en sortie soit les images provenant des circuits de mémoire 16 et 17, soit les images sélectionnées par le moyen de sélection 15.

Avec une telle caméra stéréoscopique, il est ainsi possible de mémoriser des images provenant soit des caméras 10 et 11, soit de l'équipement extérieur 30.

Au moment de filmer une scène, l'opérateur peut visualiser la scène courante filmée par les caméras 10 et 11, et la comparer avec une scène mémorisée préalablement dans les circuits de mémorisation 16 et 17. Le moyen de sélection 18 est alors utilisé pour commuter entre les deux scènes. L'opérateur peut alors comparer les deux scènes et agir sur les commandes de la caméra stéréoscopique pour régler les paramètres de la caméra en fonction de ses besoins. A noter que, pour que la comparaison de deux images soit probante, il faut que les images comparées soient de même qualité. Il est donc préférable que les images mémorisées dans les circuits 16 et 17 ne soient pas compressées.

Bien entendu, les moyens de l'invention peuvent être utilisés dans une caméra à multiple vues comprenant n caméras 2D. Dans ce cas, la caméra comporte alors n circuits de mémoire.

Avantageusement, la caméra stéréoscopique comporte également un circuit de mémorisation supplémentaire 20 pour stocker des valeurs des signaux de commande C1 et C2 des caméras 10 et 11, les signaux C1 et C2 mémorisés correspondant à un réglage donné de la caméra stéréoscopique. Ainsi, avant modification des paramètres opto-mécaniques de la caméra, l'opérateur mémorise les signaux de commande correspondant à un réglage de départ. Il peut ensuite modifier la valeur de ces paramètres pour essayer d'améliorer le réglage. S'il estime que le nouveau réglage est moins intéressant que le réglage de départ, l'opérateur peut alors récupérer les signaux mémorisés C'1 et C'2 qui correspondent au réglage de départ. Avantageusement, le circuit de mémorisation 20 stocke tous les signaux envoyés aux caméras 10 et 11 qui correspondent non seulement aux valeurs d'autres paramètres tels que le gain ou l'ouverture d'iris des caméras 10 et 11.

## Revendications

1. Caméra stéréoscopique comportant
- des première et seconde caméras (10,11) destinées à générer respectivement des première et seconde séquences d'images, chaque image de ladite première séquence étant associée à une image de ladite seconde séquence, et
- des moyens (14) pour visualiser une séquence d'images stéréoscopiques à partir desdites première et seconde séquences d'images,
**caractérisée en ce qu'**elle comporte en outre :
- des premiers moyens de mémorisation (16,17) pour mémoriser respectivement au moins une image de ladite première séquence d'images et l'image associée de ladite seconde séquence d'images, et
- un premier moyen de sélection (18) placé en amont des moyens de visualisation et destiné à fournir sélectivement auxdits moyens de visualisation (14) soit ladite au moins une image mémorisée de ladite première séquence d'images et l'image mémorisée associée de ladite seconde séquence d'images, soit lesdites première et secondes séquences d'images en provenance desdites premières et secondes caméras (10,11).

2. Caméra stéréoscopique selon la revendication 1, **caractérisée en ce qu'**elle comporte en outre:
- des première et seconde entrées (12,13) pour recevoir respectivement des troisième et quatrième séquences d'images en provenance d'un équipement extérieur à ladite caméra stéréoscopique, chaque image de ladite troisième séquence étant associée à une image de ladite quatrième séquence, et
- un second moyen de sélection (15) pour fournir sélectivement auxdits premiers moyens de mémorisation (16,17) soit lesdites première et seconde séquences d'images en provenance desdites première et seconde caméras (10,11), soit lesdites troisièmes et quatrième séquences d'images en provenance dudit équipement extérieur.

3. Caméra stéréoscopique selon la revendication 1 ou 2, **caractérisée en ce que** lesdits premiers moyens de mémorisation (16,17) comporte deux circuits de mémoire pour mémoriser chacune au moins une image.

4. Caméra stéréoscopique selon l'une quelconque des revendications 1 à 3, **caractérisée en ce qu'**elle comporte en outre un deuxième moyen de mémorisation (19) destiné à mémoriser des valeurs représentatives de paramètres de réglage desdites première et seconde caméras (10,11), notamment des valeurs représentatives de l'angle et la distance entre lesdites première et secondes caméras, de leurs distances focales et de leurs mises au point respectives.

5. Caméra stéréoscopique selon la revendication 3 ou 4, elle-même dépendante de la revendication 2, **caractérisée en ce que** l'équipement extérieur est un magnétoscope.

6. Caméra stéréoscopique selon la revendication 3 ou 4, elle-même dépendante de la revendication 2, **caractérisée en ce que** l'équipement extérieur est un disque dur d'un dispositif d'enregistrement.
